Europäisches Patentamt

(19) European Patent Office

Office européen des brevets

(11) Numéro de publication : **0 063 968**
**B1**

(12) **FASCICULE DE BREVET EUROPÉEN**

(45) Date de publication du fascicule du brevet :
28.11.84

(21) Numéro de dépôt : 82400516.9

(22) Date de dépôt : 23.03.82

(51) Int. Cl.³ : **F 15 B 19/00**, G 01 M 19/00,
G 01 M   3/28

(54) **Installation et procédé pour la vérification des conditions de fonctionnement d'un organe de contrôle de débit et de pression.**

(30) Priorité : 15.04.81 FR 8107953

(43) Date de publication de la demande :
03.11.82 Bulletin 82/44

(45) Mention de la délivrance du brevet :
28.11.84 Bulletin 84/48

(84) Etats contractants désignés :
AT BE CH DE FR GB IT LI NL

(56) Documents cités :
DE-A- 2 801 183
FR-A- 2 343 179
ÖLHYDRAULIK UND PNEUMATIK, vol. 21, no. 1, janvier 1977 Mainz, DE G. SCHEFFEL: "Prüfstand und Versuchsventil für stationäre und dynamische Ventil-untersuchungen ", pages 28-31
HYDRAULICS & PNEUMATICS, vol. 30, no. 7, juillet 1977 Cleveland, US T.T. EVANS: "Hydraulic test stand solves maintenance problems", pages 91-93

(73) Titulaire : **ROBINETTERIE, S.F.R., S.A.**
**13 rue Jean Jacques Rousseau**
**F-80390 Fressenneville (FR)**

(72) Inventeur : **Hendrick, Jean**
**7 rue M. Ravel**
**F-80130 Friville-Escarbotin (FR)**

(74) Mandataire : **Ecrepont, Robert**
**Cabinet Ecrepont 12 Place Simon Vollant (Porte de Paris)**
**F-59800 Lille (FR)**

**Description**

L'invention se rapporte à une installation et procédé pour la vérification des conditions de fonctionnement d'un organe de contrôle de débit et de pression tel un injecteur, une soupape, un clapet, un groupe de sécurité, etc... ci-après dénommé « organe de contrôle ».

On sait que les organes de contrôle doivent garantir, non seulement l'obtention d'un débit de fluide dès que celui-ci est à une certaine pression dite de tarage mais aussi :

— que ce débit atteindra une valeur déterminée dès que la pression du fluide sera, d'une certaine valeur, supérieure à la pression de tarage et,

— l'interruption totale de ce débit dès que la pression du fluide sera, d'une certaine valeur, redevenue inférieure à la pression de tarage.

Un tel organe comprend généralement une soupape dont l'ouverture est commandée par une pression dans le circuit raccordé à son entrée, laquelle pression contrarie l'action d'un ressort.

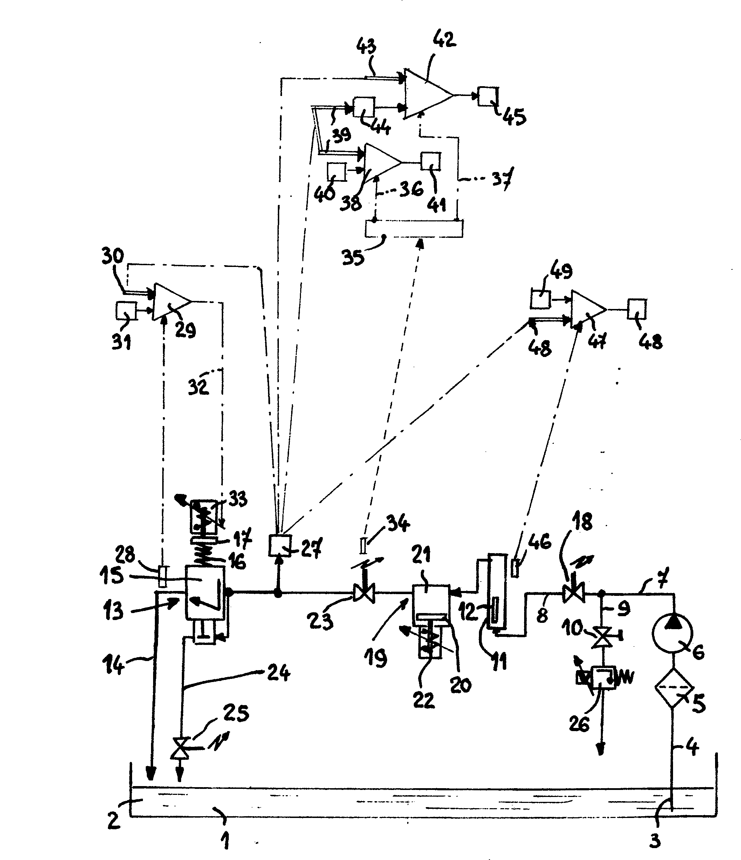

A ce jour, pour vérifier le débit d'un tel organe sous des pressions stationnaires où relativement stationnaires, il est connu (figure 1, page 28 de la revue « Ölhydraulik und pneumatik » 21-1977) d'utiliser une installation comprenant une pompe à débit variable, un organe à vérifier, un débitmètre et, raccordé en aval de la pompe mais en amont de l'organe à vérifier, un circuit de dérivation placé sous le contrôle d'une soupape de sûreté.

Pour vérifier un organe sous des pressions dites dynamiques, c'est-à-dire avec variations brutales dont l'importance peut atteindre plus de cent pour cent, il est également connu (figure 2, page 28 de la revue « Ölhydraulik und pneumatik » 21-1977) d'utiliser une installation du type de celle utilisée pour les pressions stationnaires mais qui en outre est pourvue de moyens en vue de provoquer la variation brutale de pression évoquée plus haut.

Par exemple, ces moyens comprennent, en aval de la pompe mais en amont de l'organe à vérifier, un circuit de dérivation comprenant également un débitmètre mais surtout un obturateur contrôlé par un circuit de pilotage incluant un distributeur permettant :

— d'une part, d'inhiber l'obturateur et, par le débit alors permis dans la dérivation, de simuler ainsi une utilisation du fluide et,

— d'autre part, d'assurer l'entrée en action brutale de l'obturateur ce qui par voie de conséquence élève aussi brutalement la pression dans le circuit principal et donc à l'entrée de l'organe à vérifier.

Cette dernière installation n'a de ce fait aucun rapport avec l'objet de l'invention qui se limite volontairement, comme c'est le cas de la première installation citée (figure 1, page 28) à une installation pour des vérifications de pressions stationnaires ou relativement stationnaires c'est-à-dire sans variation brutale et importante de la pression.

Dans la première installation citée, toutes les vérifications se font par une action directe de la pompe, ce qui nécessite d'ailleurs la présence d'un accumulateur amortissant les à-coups du flux sortant de la pompe.

Avec cette installation qui a le défaut d'être d'un coût très élevé du fait notamment de la pompe à débit variable et de l'accumulateur qu'elle nécessite, le procédé de vérification est très archaïque :

— Pour contrôler la pression de tarage, il faut, par augmentation du débit de la pompe, augmenter progressivement la pression dans la conduite principale et surveiller l'organe à vérifier pour qu'à l'instant où il y aura amorçage du débit, effectuer une lecture des organes de contrôle de la pression dans le circuit. Il faut bien sûr agir rapidement car la pression monte constamment et la lecture est faussée.

Si la pression lue n'est pas conforme à la pression souhaitée on règle l'organe à vérifier puis on recommence la vérification et ainsi de suite, jusqu'à ce que la pression correcte soit obtenue par tatonnements successifs qui toutefois prennent beaucoup de temps.

— Pour contrôler l'étanchéité de l'organe à vérifier, laquelle étanchéité doit être totale dès que le fluide qui s'y présente est à une pression de référence inférieure d'une certaine valeur à la pression de tarage, on doit réduire le débit de la pompe jusqu'à l'instant où l'on obtient ladite pression de référence dans le circuit et, sans perdre de temps, on doit observer l'organe à vérifier pour s'assurer qu'il n'y a plus de débit.

— Pour contrôler qu'un débit d'une valeur prédéterminée est assuré dès que la pression du fluide parvenant à l'organe à vérifier est à une autre pression de référence qui est supérieure d'une certaine valeur à la pression de tarage, on augmente également les débit de la pompe jusqu'à l'instant où l'on obtient ladite pression de référence supérieure dans le circuit et, aussitôt, on doit effectuer une lecture sur le débitmètre, en tenant bien sûr compte de l'éventuelle influence que peut avoir sur le débitmètre, le débit au travers de la soupape de sûreté.

Un résultat que l'invention vise à obtenir est une installation et un procédé permettant des vérifications rapides et sûres avec un matériel d'un coût relativement peu élevé.

A cet effet, l'invention a pour objet une installation de vérification des conditions de fonctionnement d'un organe de contrôle de débit et de pression du type cité plus haut, notamment caractérisé en ce qu'elle comprend :

— un organe d'isolement qui, sur le circuit principal en deux parties, est placé en aval de la pompe et du circuit de dérivation et délimite les parties amont et aval de ce circuit principal,

— un organe de variation progressive et constante du volume de la partie aval du circuit principal s'étendant de l'organe d'isolement précité jusqu'à l'organe à vérifier,

— un organe intermédiaire d'isolement situé entre l'organe à vérifier et l'organe de variation progressive et constante du volume de la partie aval du circuit principal et,

— un circuit de purge contrôlé par un organe d'isolement et raccordé à la partie aval du circuit principal et ce juste en amont de l'organe à vérifier.

L'invention a également pour objet le procédé de vérification mis en œuvre avec cette installation.

Elle sera bien comprise à l'aide de la description ci-après faite en regard du dessin ci-annexé, qui représente schématiquement l'installation selon l'invention.

En se reportant au dessin, on voit que l'installation comprend un réservoir 1 contenant le liquide 2 utilisé pour les vérifications et dans lequel plonge la base 3 d'une conduite 4 qui, après avoir traversé un filtre 5, est raccordée à l'orifice d'aspiration d'une pompe 6.

Au lieu de ce qui précède, l'installation peut évidemment être raccordée à une autre source telle un réseau de distribution de liquide sous pression.

La conduite 7 de sortie de cette source débite à la fois dans le circuit principal 8 et dans le circuit de dérivation 9 par lequel, le liquide retourne au réservoir 1, sous le contrôle d'au moins une vanne 10 permettant de faire varier la perte de charge et le débit dans le circuit principal.

Le circuit principal 8 traverse un débitmètre 11, tel un débitmètre à ludion 12, puis parvient à l'organe de contrôle.

Le liquide pouvant être débité par cet organe de contrôle 13, retourne au réservoir 1, par exemple au travers d'une conduite 14. L'organe de contrôle 13 sera par exemple une soupape de sûreté 15 dont l'ouverture est commandée par la pression du liquide en amont dudit organe de contrôle, laquelle pression contrarie l'action d'un ressort de rappel 16 dont la force est réglée par action sur un dispositif de tarage 17 tel un piston ou une vis de pression.

Selon une caractéristique essentielle de l'invention, l'installation comprend :

— d'une part, placé à l'entrée du circuit principal 8, un organe d'isolement 18 qui permet donc, pour au moins certaines des vérifications, d'isoler ce circuit principal, tant de la conduite 7 de refoulement de la pompe, que du circuit de dérivation 9 retournant au réservoir et,

— d'autre part, agissant dans le circuit principal, entre l'organe à vérifier 13 et l'organe d'isolement 18, un organe 19 de variation progressive et constante du volume de ce circuit principal.

L'organe 19 de variation progressive du volume pourra être constitué par tout moyen agissant progressivement et surtout sans pulsations, et par exemple, par un piston 20 pénétrant plus ou moins dans une enceinte 21 sous le contrôle d'un vérin à vis 22 à commande électrique ou d'un vérin hydraulique à régulation précise ou d'une pompe d'un type apte à assurer un débit sans pulsations.

C'est grâce à cette vanne d'isolement 18 et à cet organe de variation de volume du circuit principal 8 que, lors des vérifications, on peut faire varier très progressivement et sans pulsations, la pression dans le circuit principal et donc sans utiliser la pompe 6 qui, quant à elle, provoquerait lesdites pulsations et sans intervenir sur la vanne 10 de la conduite de dérivation 9.

Selon une autre caractéristique essentielle de l'invention, entre l'organe 19 de variation du volume et l'organe 13 de contrôle, est intercalé un organe intermédiaire d'isolement 23.

De manière également remarquable, au circuit principal 8 est encore raccordé un circuit de purge 24, contrôlé par un troisième organe d'isolement 25.

Les divers organes d'isolement 18, 23, 25 cités ci-dessus consisteront de préférence en des électrovannes fonctionnant en tout ou rien.

Sur la conduite de dérivation 9 est par contre intercalé un organe 26 de réglage du débit tel un étrangleur ou un électrovanne d'ouverture réglable.

Dans le tronçon de circuit principal situé entre l'organe de contrôle 13 et l'organe intermédiaire d'isolement 23 est raccordé un lecteur de pression 27.

Le procédé de vérification mis en œuvre à l'aide de cette installation est divisé en trois phases : une première phase de vérification et de réglage à la pression dite de tarage, une seconde phase de contrôle d'étanchéité à une pression inférieure à celle de tarage, et une troisième phase de contrôle de débit à une pression supérieure à celle de tarage.

La première phase se déroule comme suit :

— on ouvre les organes d'isolement 18, 23, 25 et on actionne la pompe 6 afin de remplir le circuit principal sous la pression de la pompe, déduction faite des pertes de charge, en faisant en sorte que ladite pression de remplissage soit supérieure à la pression de tarage,

— on ferme alors l'organe d'isolement 25 du circuit de purge 24 puis l'organe d'isolement 18 placé à l'entrée du circuit principal 8,

— par action sur l'organe 19 de variation du volume, on fait monter progressivement et sans pulsations la pression dans le circuit principal 8 jusqu'à amorcer le débit par l'organe de contrôle 13,

— un circuit 28, par exemple, sensible au début de l'action de l'organe à vérifier 13, déclenche alors un comparateur 29 d'un signal 30 représentatif de la pression réelle dans le circuit et d'un signal 31 représentatif de la pression de consigne de tarage,

— selon son propre sens, le signal différentiel 32, issu de la comparaison, commande dans un sens ou dans l'autre, un moteur 33 relié au dispositif de tarage 17, jusqu'à obtention de la pression de consigne de tarage par exemple par translation ou par vissage-dévissage.

L'avantage de ce procédé de tarage est évidemment un réglage permanent et surtout alors que la pression dans le circuit est isolée des influences des pulsations de la pompe.

A partir de la situation obtenue au terme de la première phase, la seconde se déroule quant à elle comme suit :

— on ferme l'organe intermédiaire d'isolement 23. Comme la pression dans le tronçon de circuit sur lequel est raccordé l'organe à vérifier 13 est à la pression de tarage, ledit organe de contrôle 13 autorise un léger débit d'où une chute de pression d'importance en rapport avec le temps qui s'écoule à compter de la fermeture de l'organe intermédiaire d'isolement.

— Sensible à la fermeture de l'organe intermédiaire 23, un circuit 34 déclenche au moins un moyen 35 de comptage du temps tel un jeu de temporisations qui émet deux tops 36, 37, l'un 36 après que s'est écoulé un temps normalement plus que suffisant pour la fermeture de l'organe à vérifier, et l'autre 37 après un temps légèrement supérieur. Par exemple, les tops se suivront respectivement à deux et quatre secondes de la fermeture de la vanne intermédiaire 23.

— Le premier top 36 déclenche un comparateur 38 d'un signal 39 représentatif de la pression réelle dans le tronçon de circuit et d'un signal 40 représentatif d'une pression de référence pour l'instant considéré et par exemple égale à la pression de tarage diminuée de un bar.

— Si la pression réelle est inférieure à cette pression de référence, cela signifie que l'organe de contrôle s'est fermé trop tard. Le comparateur 38 qui détecte cette différence déclenche alors un circuit de défaut 41.

— Le deuxième top 37 déclenche quant à lui, un comparateur 42 du signal 43 représentatif de la pression réelle dans le circuit et du signal 39 représentatif de la pression qui sévissait dans le circuit lors du premier top, lequel signal avait à cette fin été laissé en mémoire 44. En cas de différence, ce qui signifierait bien sûr que l'organe de contrôle n'était pas encore fermé lors du premier top, le comparateur 42 déclenche un circuit de défaut 45. Le double contrôle de l'étanchéité et la méthode suivie sont donc beaucoup plus sûrs que le simple contrôle visuel de l'absence de débit après avoir fait revenir le circuit à la pression de référence.

Pour la troisième phase de vérification :

— on laisse fermé l'organe d'isolement 25 du circuit de purge 24, mais on ouvre tant l'organe d'isolement 18 de l'entrée du circuit principal que l'organe intermédiaire 23 d'isolement de ce circuit ;

— on ouvre complètement l'organe de débit 26 de la conduite de dérivation 9 et on met en marche la pompe 6 ;

— ensuite, on ferme progressivement l'organe de débit 26 dans la conduite de dérivation pour réduire les pertes de charge afin, par la même occasion, de faire monter progressivement la pression dans le circuit principal 8 ;

— dès le retour à la pression de tarage, l'organe de contrôle 13 recommence à débiter ;

— on poursuit, néanmoins, la fermeture de l'organe de débit 26 de la conduite de dérivation pour augmenter le débit dans le circuit principal.

— lorsque le débitmètre 11 marque un débit prédéterminé, correspondant par exemple à une certaine hauteur du ludion 12, un circuit 46 déclenche un comparateur 47 d'un signal 48 représentatif de la pression réelle dans le circuit et un signal 49 représentatif d'une pression de référence, par exemple, égale à la pression de tarage majorée de un bar ;

— c'est donc lorsque la pression dans le circuit est supérieure à la pression de référence que le comparateur 47 déclenche un circuit de défaut 48, ce qui est une démarche inverse de celle qui était antérieurement suivie, puisqu'alors on faisait monter la pression jusqu'à celle dite de référence et seulement on contrôlait le débit.

Evidemment, l'installation comporte aussi un moyen (non représenté) synchronisant les différentes phases des vérifications.

**Revendications**

1. Installation pour la vérification des conditions de fonctionnement d'un organe (13) de contrôle de débit et de pression ci-après dit « organe à vérifier », laquelle installation comprend, d'une part, une pompe (6) débitant dans un circuit principal en deux parties (7, 8) passant par un débitmètre (11) et l'organe à vérifier (13), tel une soupape de sûreté (15) dont l'ouverture est commandée par la pression du liquide dans le circuit principal (8), laquelle pression contrarie l'action d'un élément de rappel (16) dont la force est réglée par un dispositif de tarage (17) et, d'autre part un circuit de dérivation (9) sous le contrôle d'au moins un organe (10, 26) de réglage de débit ; cette installation étant caractérisée en ce qu'elle comprend :

— un organe d'isolement (18) qui, sur le circuit principal en deux parties (7 et 8), est placé en aval de la pompe (6) et du circuit de dérivation (9) et délimite les parties amont (7) et aval (8) de ce circuit principal,

— un organe (19) de variation progressive et constante du volume de la partie aval (8) du circuit principal s'étendant de l'organe d'isolement (18) précité jusqu'à l'organe à vérifier (13),

— un organe intermédiaire d'isolement (23) situé entre l'organe à vérifier (13) et l'organe (19) de variation progressive et constante du volume de la partie aval (8) du circuit principal, et,

— un circuit de purge (24) contrôlé par un organe d'isolement (25) et raccordé à la partie aval (8) du circuit principal (7, 8) et ce juste en amont de l'organe à vérifier (13).

2. Installation selon la revendication 1, caractérisée en ce que l'organe (19) de variation constante du volume consiste en un piston (20) pénétrant plus ou moins dans une enceinte (21) sous le contrôle d'un vérin à vis (22) à commande électrique.

3. Installation selon la revendication 1, caractérisé en ce que l'organe (19) de variation constante du volume consiste en un piston (20) pénétrant plus ou moins dans une enceinte (21) sous le contrôle d'un vérin hydraulique à régulation précise.

4. Installation selon la revendication 1, caractérisée en ce que l'organe (19) de variation constante du volume consiste en un piston (20) pénétrant plus ou moins dans une enceinte (21) sous le contrôle d'une pompe apte à assurer un débit sans pulsations.

5. Installation selon l'une quelconque des revendications 1 à 4 caractérisée en ce que les différents organes d'isolement (18, 23, 25) sont des électrovannes fonctionnant en tout ou rien.

6. Procédé de vérification des conditions de fonctionnement d'un organe (13) de contrôle de débit et de pression à l'aide d'une installation selon l'une quelconque des revendications 1 à 5, caractérisé en ce qu'il est scindé en trois phases synchronisées, dont une première phase de vérification et de réglage à la pression de tarage, puis une seconde phase de contrôle d'étanchéité à une pression inférieure à celle de tarage, et une troisième phase de contrôle de débit à une pression supérieure à celle de tarage.

7. Procédé selon la revendication 6 caractérisé en ce que pour la première phase :
— on ouvre les organes d'isolement (18, 23, 25) et on actionne la pompe (6),
— après remplissage du circuit, on ferme alors l'organe d'isolement (25) du circuit de purge (24) puis l'organe d'isolement (18) placé à l'entrée de la partie aval (8) du circuit principal,
— par action sur l'organe (19) de variation du volume, on fait monter progressivement et sans pulsation la pression dans la partie aval (8) du circuit principal jusqu'à amorcer le débit,
— par un circuit (28) sensible au début de l'action de l'organe à vérifier (13) on déclenche alors un comparateur (29) d'un signal (30) représentatif de la pression réelle dans la partie aval (8) du circuit principal et d'un signal (31) représentatif de la pression de consigne de tarage,
— à l'aide du signal différentiel issu de la comparaison et, selon son propre sens, on commande alors dans un sens ou dans l'autre, un moteur (33) relié au dispositif de tarage (17) jusqu'à obtention de la pression de consigne de tarage.

8. Procédé selon la revendication 6 ou 7 caractérisé en ce que pour la seconde phase :
— on ferme l'organe intermédiaire d'isolement (23),
— par un circuit (34) sensible à la fermeture de l'organe intermédiaire (23), on déclenche au moins un moyen (35) de comptage du temps, tel un jeu de temporisations, qui émet deux tops (36, 37), l'un (36) après que s'est écoulé un temps normalement plus que suffisant pour la fermeture de l'organe à vérifier (13), et l'autre (37) après un temps légèrement supérieur,
— par le premier top (36), on déclenche un comparateur (38) d'un signal (39) représentatif de la pression réelle dans un tronçon du circuit principal aval de cet organe intermédiaire (23) et d'un signal (40) représentatif d'une pression de référence pour l'instant considéré et par exemple égale à la pression de tarage diminuée de un bar,
— si la pression réelle est inférieure à cette pression de référence, par le comparateur (38) qui détecte cette différence, on déclenche alors un circuit de défaut 41,
— par le deuxième top (37) on déclenche un comparateur (42) du signal (43) représentatif de la pression réelle dans le tronçon du circuit principal et du signal (39) représentatif de la pression qui sévissait dans le tronçon lors du premier top, lequel signal avait à cette fin été laissé en mémoire (44),
— en cas de différence, par le comparateur (42), on déclenche un circuit de défaut (45).

9. Procédé selon l'une quelconque des revendications 6 à 8, caractérisé en ce que, pour la troisième phase :
— on laisse fermé l'organe d'isolement (25) du circuit de purge (24), mais on ouvre tant l'organe d'isolement (18) de l'entrée de la partie aval (8) du circuit principal que l'organe intermédiaire (23) d'isolement de ce circuit,
— on ouvre complètement l'organe de débit (26) de la conduite de dérivation (9) et on met en marche la pompe (6),
— ensuite, on ferme progressivement l'organe de débit (26) dans la conduite de dérivation,
— dès le retour à la pression de tarage, l'organe de contrôle (13) recommence à débiter mais on poursuit néanmoins la fermeture de l'organe de débit (26) de la conduite de dérivation pour augmenter le débit dans le circuit principal,
— lorsque le débitmètre (11) marque un débit prédéterminé, par un circuit (46) on déclenche un comparateur (47) d'un signal (48) représentatif de la pression dans le circuit principal (7, 8) et d'un signal (49) représentatif d'une pression de référence,
— lorsque la pression dans le circuit principal (7, 8) est supérieure à la pression de référence, par le comparateur (47) on déclenche un circuit de défaut (48).

**Claims**

1. An installation for checking the operating conditions of a member (13) for controlling flow rate and pressure, hereinafter referred to as « member to be checked », which installation comprises, on the one hand, a pump (6) discharging into a two-part main circuit (7, 8) passing through a flowmeter (11) and the member to be checked (13), such as a safety valve (15) whose opening is controlled by the pressure of the liquid in the main circuit (8), which pressure counters the action of a return element (16) whose force is regulated by a calibration device (17), and, on the other hand, a bypass circuit (9) controlled by a least one member (10, 26) for regulating the flow rate ; this installation being characterized in that it comprises :

— an isolating member (18), which on the two-part main circuit (7 and 8), is located downstream of the pump (6) and of the bypass circuit (9) and delimits the upstream (7) and downstream (8) parts of this main circuit,

— a member (19) for progressively and constantly varying the volume of the downstream part (8) of the main circuit extending from the above-mentioned isolating member (18) to the member to be checked (13),

— an intermediate isolating member (23) situated between the member to be checked (13) and the member (19) for progressively and constantly varying the volume of the downstream part (8) of the main circuit and,

— a drain circuit (24) controlled by an isolating member (25) and connected to the downstream part (8) of the main circuit (7, 8) just upstream of the member to be checked (13).

2. An installation according to claim 1, characterized in that the member (19) for constantly varying the volume consists of a piston (20) penetrating to a greater or lesser degree into an enclosure (21) under the control of an electrically controlled screw jack (22).

3. An installation according to claim 1, characterized in that the member (19) for constantly varying the volume consists of a piston (20) penetrating to a greater or lesser extent into an enclosure (21) under the control of a precisely regulated hydraulic jack.

4. An installation according to claim 1, characterized in that the member (19) for constantly varying the volume consists of a piston (20) penetrating to a greater or lesser degree into an enclosure (21) under the control of a pump for ensuring a flow without pulsations.

5. An installation according to any one of claims 1 to 4, characterized in that the different isolating members (18, 23, 25) are electrovalves operating on the all or nothing principle.

6. A method for checking the operating conditions of a member (13) for controlling flow rate and pressure, using an installation according to any one of claims 1 to 5, characterized in that it is divided into three synchronous phases, namely a first checking and regulating phase at the calibration pressure, then a second tightness control phase at a pressure which is less than the calibration pressure, and a third flow rate and pressure control phase at a pressure greater than the calibration pressure.

7. A method according to claim 6, characterized in that for the first phase :

— the isolating members (18, 23, 25) are opened and the pump (6) is actuated,

— after the circuit is filled, the isolating member (25) of the drain circuit (24) and then the isolating member (18) located at the inlet of the downstream part (8) of the main circuit is closed,

— by actuating the member (19) for varying the volume, the pressure in the downstream part (8) of the main circuit is increased progressively and without pulsations until the flow commences,

— a comparator (29) for a signal (30) which is representative of the actual pressure of the downstream part (8) of the main circuit and for a signal (31) which is representative of the set calibration pressure is triggered by means of a circuit (28), which is sensitive to the flow of the action of the checking member (13),

— a motor (33) connected to the calibration device (17) is then controlled by means of the differential signal, resulting from the comparison, in one or other direction depending on its own direction, until the set calibration pressure is obtained.

8. A method according to claim 6 or 7, characterized in that for the second phase :

— the intermediate isolating member (23) is closed,

— at least one time counting means (35), such as a timing assembly, which emits two pulses (36, 37), one (36) after a time has a elapsed which is normally more than sufficient for closing the member to be checked (13), and the other after a slightly longer time, is triggered by means of a circuit (34), which is sensitive to the closing of the intermediate member (23),

— a comparator (38) for a signal (39), which is representative of the actual pressure in a section of the main circuit downstream of this intermediate member (23) and for a signal (40) which is representative of a reference pressure for the moment in question and, for example, equal to the calibration pressure reduced by one bar, is triggered by the first pulse (36),

— if the actual pressure is less than this reference pressure, a fault circuit (41) is triggered by the comparator (38), which detects this difference,

— a comparator (42) for the signal (43), which is representative of the actual pressure in the section of the main circuit and for the signal (39), which is representative of the pressure which prevailed in the section during the first pulse, which signal had been left in the memory (44) for this purpose, is triggered by the second pulse (37).

— if there is a difference the fault circuit (45) is triggered by the comparator (42).

9. A method according to any one of claims 6 to 8, characterized in that for the third phase :

— the isolating member (25) of the drain circuit (24) is left closed but both the isolating member (18) of the inlet of the downstream part (8) of the main circuit and the intermediate isolating member (23) of this circuit are opened,

— the flow member (26) of the bypass line (9) is completely opened and the pump (6) is actuated,

— then, the flow member (26) in the bypass line is progressively closed,

— once the calibration pressure has returned, the control member (13) begins to discharge again but the flow member (26) of the bypass line is closed in order to increase the flow rate in the main circuit,

— when the flowmeter (11) indicates a predetermined flow rate, a comparator (47) for a signal (48), which is representative of the pressure in the main circuit (7, 8), and for a signal (49), which is representative of a reference pressure, is triggered by means of a circuit (46),
— when the pressure in the main circuit (7, 8) is greater than the reference pressure, a fault circuit (48) is triggered by means of the comparator (47).

**Ansprüche**

1. Vorrichtung zur Überprüfung der Funktionsbedingungen eines Elements (13) für die Steuerung der Durchflußmenge und des Drucks, nachfolgend kurz Prüfelement genannt, mit einer Pumpe (6), die eine aus zwei Abschnitten (7, 8) bestehende Hauptleitung speist, die durch einen Durchflußmesser (11) und das Prüfelement (13) in der Art eines Sicherheitsventils (15) führt, dessen Öffnung durch den Druck der Flüssigkeit in der Hauptleitung (8) gesteuert wird, wobei dieser Druck der Wirkung eines Rückstellelements (16) entgegenwirkt, dessen Kraft durch ein Tarierelement (17) geregelt wird, und mit einer Zweigleitung (9), die der Steuerung durch zumindest ein Element (10, 26) für die Regelung der Durchflußmenge unterliegt, gekennzeichnet durch ein Absperrelement (18), das in der Hauptleitung aus zwei Abschnitten (7 und 8) stromabwärts der Pumpe (6) und der Zweigleitung (9) angeordnet ist und die Abschnitte stromaufwärts (7) und stromabwärts (8) der Hauptleitung begrenzt, ein Element (19) für die progressive und konstante Änderung des Volumens des stromabwärtigen Abschnitts (8) der Hauptleitung, der sich von dem Absperrelement (18) bis zu dem Prüfelement (13) erstreckt, ein Zwischenabsperrelement (23), das zwischen dem Prüfelement (13) und dem Element (19) für die progressive und konstante Änderung des Volumens des stromabwärtigen Abschnitts (8) der Hauptleitung angeordnet ist, und eine Entleerungsleitung (24), die durch ein Absperrelement (25) gesteuert und an den stromabwärtigen Abschnitt (8) der Hauptleitung (7, 8), und zwar exakt stromaufwärts des Prüfelements (13) angeschlossen ist.

2. Vorrichtung nach Anspruch 1, dadurch gekennzeichnet, daß das Element (19) für die konstante Änderung des Volumens in Form eines kolbens (20) vorgesehen ist, der unter Steuerung durch ein elektrisch angetriebenes Hubelement (22) mehr oder weniger in ein Gehäuse (21) eintritt.

3. Vorrichtung nach Anspruch 1, dadurch gekennzeichnet, daß das Element (19) für die konstante Änderung des Volumens in Form eines Kolbens (20) vorgesehen ist, der unter Steuerung durch ein hydraulisches Hubelement für präzise Einstellung mehr oder weniger in ein Gehäuse (21) eintritt.

4. Vorrichtung nach Anspruch 1, dadurch gekennzeichnet, daß das Element (19) für die konstante Änderung des Volumens in Form eines Kolbens (20) vorgesehen ist, der unter Steuerung durch eine Pumpe, die für einen pulsationsfreien Durchfluß sorgt, mehr oder weniger in ein Gehäuse (21) eintritt.

5. Vorrichtung nach einem der Ansprüche 1 bis 4, dadurch gekennzeichnet, daß die verschiedenen Absperrelemente (18, 23, 25) in Form von Elektroschiebern vorgesehen sind, die alle arbeiten oder nicht.

6. Verfahren zur Überprüfung der Funktionsbedingungen eines Elements (13) für die Steuerung der Durchflußmenge und des Drucks zur Durchführung an einer Vorrichtung nach einem der Ansprüch 1 bis 5, gekennzeichnet durch die Unterteilung in drei synchronisierte Phasen, nämlich in eine erste Phase der Überprüfung und Regelung auf einen Eichdruck, eine zweite Phase der Kontrolle der Dichtheit bei einem Druck unter dem Eichdruck und eine dritte Phase der Kontrolle des Durchflusses bei einem Druck über dem Eichdruck.

7. Verfahren nach Anspruch 6, dadurch gekennzeichnet, daß in der ersten Phase die Absperrelemente (18, 23, 25) geöffnet werden und die Pumpe (16) in Betrieb gesetzt wird, daß nach Speisung der Leitung das Absperrelement (25) der Entleerungsleitung (24) und anschließend das am Eingang des stromabwärtigen Abschnitts (8) der Hauptleitung angeschlossene Absperrelement (18) geschlossen wird, daß durch Einwirkung auf das Element (19) für die Änderung des Volumens ein progressiver und pulsationsfreier Anstieg des Drucks in dem stromabwärtigen Abschnitt (8) der Hauptleitung bewirkt wird, nämlich bis zum Eintritt der Ausströmung, daß durch eine von dem Beginn der Betätigung des Prüfelements (13) abhängige Schaltung (28) ein Komparator (29) eines Signals (30), das für den reellen Druck in dem stromabwärtigen Abschnitt (8) der Hauptleitung repräsentativ ist, und eines Signals (31), das repräsentativ ist für den vorgschriebenen Eichdruck, betätigt bzw. ausgelöst wird und daß mit Hilfe des bei dem Vergleich ausgegebenen Differenzsignals ein an das Tarierelement (17) angeschlossener Motor (33) in der einen oder anderen Richtung angetrieben wird, und zwar bis der vorgeschriebene Eichdruck erreicht ist.

8. Verfahren nach Anspruch 6 oder 7, dadurch gekennzeichnet, daß in der zweiten Phase das Zwischenabsperrelement (23) geschlossen wird, daß durch eine in Abhängikeit der Schließung des Zwischenabsperrelements (23) arbeitende Schaltung (34) zumindest ein Zeitzählelement (35) in der Art einer Verzögerungseinheit betätigt bzw. ausgelöst wird, das zwei Zeitzeichen bzw. Zeitsignale (36, 37) ausgibt, nämlich das eine (36), nachdem mehr als genügend Zeit für das Schließen des Prüfelements (13) verstrichen ist, und das andere (37), nachdem eine geringfügig länger bemessene Zeit verstrichen ist, daß durch das erste Zeitsignal (36) ein Komparator (38) eines Signals (39), das repräsentativ ist für den reellen Druck in einem Abschnitt der Hauptleitung stromabwärts des Zwischenabsperrelements (23), und eines Signals (40), das repräsentativ ist für einen Referenzdruck für den in Betracht gezogenen Moment, der zum Beispiel gleich dem um ein Bar verringerten Eichdruck ist, betätigt wird, daß, wenn der reelle Druck unter diesem Referenzdruck liegt, durch den diese Differenz nachweisenden Komparator (38) eine Fehlerschaltung (41) betätigt bzw. ausgelöst wird, daß durch das zweite Zeitsignal (37) ein Komparator (42) des Signals (43), das repräsentativ ist für den reellen Druck in dem Abschnitt der Hauptleitung, und des Signals (39), das repräsentativ ist für den Druck, der zum Zeitpunkt des ersten Zeitzeichens bzw. Zeitsignals in dem Abschnitt vorhanden war und deshalb in dem Speicher (44) belassen wurde, betätigt wird und daß im Falle der Differenz durch den Komparator (42) eine Fehlerschaltung (45) betätigt bzw. ausgelöst wird.

9. Verfahren nach einem der Ansprüche 6 bis 8, dadurch gekennzeichnet, daß in der dritten Phase das Absperrelement (25) der Entleerungsleitung (24) geschlossen, jedoch das Absperrelement (18) am Eingang des stromabwärtigen Abschnitts (8) der Hauptleitung ebenso wie das Absperrelement (23) dieser Leitung geöffnet wird, daß das Durchflußelement (26) der Zweigleitung (9) geöffnet und die Pumpe (6) in Betrieb gesetzt wird, daß dann das Durchflußelement (26) in der Zweigleitung fortschreitend geschlossen wird, daß nach Wiedererlangen des Eichdrucks das Prüfelement (13) erneut mit dem Ausstoß beginnt, wobei jedoch der Schließvorgang des Durchflußelements (26) der Zweigleitung fortgeführt wird, so daß sich die Ausströmung in die Hauptleitung erhöht, daß, wenn der Durchflußmesser (11) eine vorher bestimmte Durchflußmenge markiert, durch eine Schaltung (46) ein Komparator (47) eines Signals (48), das für den Druck in der Hauptleitung (7, 8) repräsentativ ist, und eines Signals (49), das für einen Referenzdruck repräsentativ ist, betätigt wird und daß durch den Komparator (47) eine Fehlerschaltung (48) betätigt wird, wenn der Druck in der Hauptleitung (7, 8) höher ist als der Referenzdruck.